# FASCICULE DE BREVET EUROPEEN

(11) **EP 1 117 946 B1**
(45) Date de publication et mention de la délivrance du brevet: **03.03.2004**
(21) Numéro de dépôt: 00956582.1
(22) Date de dépôt: 31.07.2000
(51) Int. Cl.: F16F 15/123

(54) **AMORTISSEUR DE TORSION POUR EMBRAYAGE, EN PARTICULIER POUR VEHICULE AUTOMOBILE**
TORSIONSDÄMPFER FÜR KUPPLUNG, INSBESONDERE FÜR KRAFTFAHRZEUG
CLUTCH TORSIONAL VIBRATION DAMPER, IN PARTICULAR FOR MOTOR VEHICLES

(30) Priorité: 30.07.1999 FR 9909973
(43) Date de publication de la demande: 25.07.2001
(73) Titulaire: VALEO EMBRAYAGES s.a.s., 80009 Amiens Cedex 1 (FR)
(72) Inventeur: LOPEZ, Carlos, F-93585 Saint-Ouen (FR)
(74) Mandataire: Lemaire, Marc
(86) Numéro de dépôt international: PCT/FR2000/002204
(87) Numéro de publication internationale: WO 2001/009531

(56) Documents cités:
- EP-A- 0 322 208
- DE-A- 19 704 451
- FR-A- 2 558 907
- FR-A- 2 728 642

## Description

L'invention concerne un amortisseur de torsion pour embrayage, en particulier pour véhicule automobile.

De façon connue et comme décrit par le document FR-A-2 728 642, un amortisseur de torsion de ce type comprend un élément d'entrée relié par un amortisseur principal et par un pré-amortisseur à un élément de sortie, l'élément d'entrée pouvant être un disque de friction destiné à être serré par un mécanisme d'embrayage entre un plateau de pression et un plateau de réaction solidaires en rotation d'un arbre moteur, l'élément de sortie étant par exemple un moyeu solidaire en rotation d'un arbre mené tel que l'arbre d'entrée d'une boîte de vitesses dans un véhicule automobile.

L'amortisseur principal comprend deux rondelles de guidage solidaires de l'élément d'entrée, un voile annulaire disposé entre les deux rondelles de guidage et engrenant avec l'élément de sortie avec un jeu circonférentiel prédéterminé, et des organes élastiquement déformables à action circonférentielle, tels que des ressorts hélicoïdaux, logés dans des échancrures des rondelles de guidage et du voile.

De façon similaire, le pré-amortisseur comprend un élément cylindrique solidaire en rotation du voile précité et des organes élastiquement déformables à action circonférentielle, tels que des ressorts hélicoïdaux, ayant une raideur plus faible que celle des ressorts de l'amortisseur principal, montés dans des logements formés dans l'élément cylindrique précité et dans une denture de l'élément de sortie, cet élément cylindrique formant une cage extérieure du pré-amortisseur dont une cage intérieure est constituée par l'élément de sortie.

Dans un amortisseur de torsion de ce type, l'élément cylindrique qui forme la cage extérieure du pré-amortisseur est souvent réalisé d'une seule pièce en matière plastique par moulage et sert également d'organe de frottement sur une rondelle de guidage et sur l'élément de sortie et de palier conique pour le centrage de cette rondelle de guidage sur l'élément de sortie.

Les contraintes mécaniques diverses auxquelles cet élément est soumis en service, obligent à le réaliser avec une certaine épaisseur de matière pour lui conférer la résistance mécanique voulue, ce qui se traduit notamment par une augmentation de l'encombrement axial et radial du pré-amortisseur et par une augmentation du rayon moyen de l'amortisseur principal par rapport à l'axe de rotation, ce qui rend cet amortisseur principal plus sensible aux forces centrifuges.

L'invention a notamment pour but d'éviter de façon simple, efficace et peu coûteuse ces inconvénients de la technique antérieure.

Elle propose, à cet effet, un amortisseur de torsion pour embrayage, en particulier pour véhicule automobile, comprenant un élément d'entrée relié par un amortisseur principal et par un pré-amortisseur à un élément de sortie, l'amortisseur principal comprenant deux rondelles de guidage solidaires de l'élément d'entrée, un voile annulaire disposé entre les deux rondelles de guidage et engrenant avec jeu circonférentiel avec l'élément de sortie, et des premiers organes élastiquement déformables à action circonférentielle logés dans des échancrures des rondelles de guidage et du voile, le pré-amortisseur comprenant un élément cylindrique solidaire en rotation du voile précité et des seconds organes élastiquement déformables à action circonférentielle montés dans des logements formés dans l'élément cylindrique précité et dans l'élément de sortie, caractérisé en ce que ledit élément cylindrique comprend une pièce métallique dont au moins une partie est recouverte d'une couche ou épaisseur d'une matière à faible coefficient de frottement pour former une surface de guidage et/ou de frottement sur une autre pièce de l'amortisseur de torsion.

Pour une même résistance mécanique donnée, l'épaisseur de cette pièce métallique est nettement inférieure à celle d'un élément correspondant réalisé en matière plastique, ce qui permet de réduire l'encombrement axial et radial du pré-amortisseur et de rapprocher l'amortisseur principal de l'axe de rotation, tout en évitant des frottement métal sur métal grâce à la couche de matière à faible coefficient de frottement qui recouvre une partie de cette pièce métallique.

En pratique, cette pièce métallique peut être réalisée en tôle et avoir une épaisseur très inférieure à celle d'un élément correspondant en matière plastique, avec une résistance mécanique supérieure à celle de l'élément en matière plastique.

Avantageusement, la matière qui recouvre une partie de cette pièce métallique est une matière plastique, de préférence une matière thermoplastique, qui est surmoulée sur la partie précitée de la pièce métallique, cette partie pouvant comporter des trous d'ancrage remplis de la matière plastique surmoulée pour améliorer l'accrochage de cette matière sur la pièce métallique. En variante la matière est rapportée pour collage, ou encliquetage sur la pièce métallique.

Selon d'autres caractéristiques de l'invention, ladite pièce métallique peut être formée de façon économique par emboutissage et comporte des cavités formant des logements partiels des organes élastiquement déformables du pré-amortisseur.

Dans une réalisation avantageuse de l'invention, ces organes sont maintenus circonférentiellement entre des pièces intermédiaires en forme de secteur annulaire, disposées entre l'élément cylindrique formant cage extérieure du pré-amortisseur et l'élément de sortie et qui sont solidaires en rotation de l'élément de sortie, par engrenement avec une denture périphérique de ce dernier.

De façon générale, l'invention permet de réduire l'encombrement axial et radial d'un amortisseur de torsion pour embrayage, tout en améliorant le fonctionnement et en augmentant la fiabilité de cet amortisseur de torsion.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique partielle en coupe axiale d'un amortisseur de torsion selon l'invention ;
- la figure 2 est une vue schématique de droite de la cage extérieure du pré-amortisseur représenté en figure 1 ;
- la figure 3 est une vue schématique en coupe transversale, selon la ligne III-III de la figure 1, d'une variante de réalisation du pré-amortisseur de torsion.
- la figure 4 est une vue analogue à la figure 1 pour un second exemple de réalisation de l'invention.
- la figure 5 est une vue analogue à la figure 3 avec arrachement local pour montrer le voile.
- la figure 6 est une vue analogue à la figure 1 pour un troisième exemple de réalisation de l'invention.
- la figure 7 est une vue partielle selon la flèche 7 de la figure 6 avec arrachement local pour montrer la rondelle à pattes et le voile.
- les figures 8-9, 10-11, 12-13, 14-15, 16-17, 18-19, 20-21 sont des vues analogues aux figures 1, 3 pour encore d'autres exemples de réalisation.

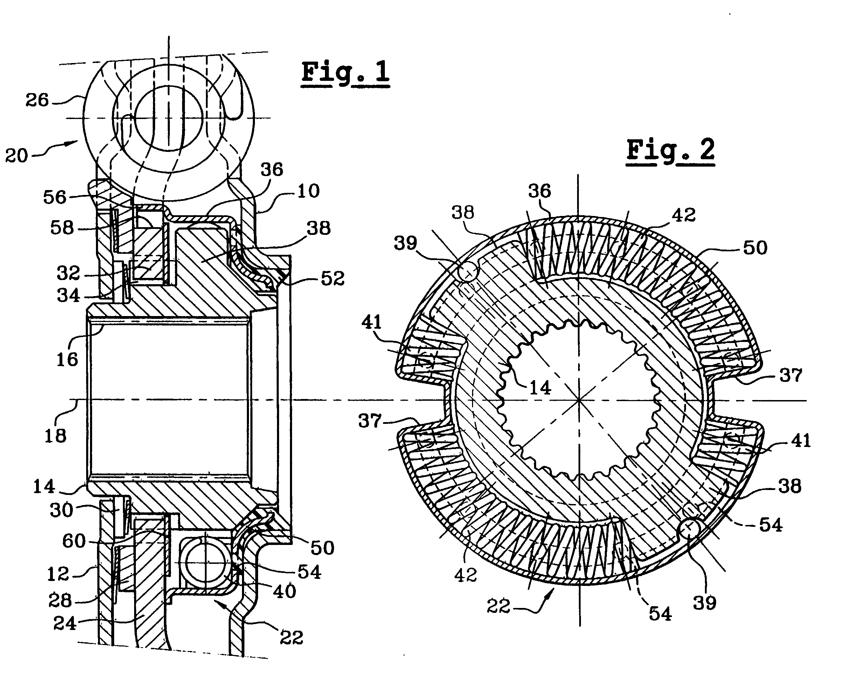

L'amortisseur de torsion de la figure 1 comprend un élément d'entrée formé de deux rondelles de guidage 10 et 12 solidaires d'un disque de friction (non représenté) et un élément de sortie 14 qui est ici un moyeu solidarisable en rotation, par des cannelures 16 de sa surface interne, avec un arbre mené tel que l'arbre d'entrée d'une boîte de vitesses dans un véhicule automobile.

Les rondelles de guidage 10 et 12 de l'élément d'entrée et le moyeu 14 sont coaxiaux par rapport à l'axe de rotation 18 de l'embrayage. Les rondelles 10 et 12 entourent le moyeu dont l'axe de symétrie axiale constitue celui de l'amortisseur-de torsion.

Les rondelles de guidage 10 et 12 sont reliées au moyeu 14 par l'intermédiaire d'un amortisseur principal 20 et d'un pré-amortisseur 22. L'amortisseur principal 20 comprend un voile annulaire 24 qui s'étend entre les deux rondelles de guidage 10 et 12 autour du moyeu 14, et des organes élastiquement déformables 26 à action circonférentielle, tels que des ressorts hélicoïdaux, qui sont logés dans des échancrures 28 et 30 respectivement des rondelles de guidage 10 et 12 et du voile 24, pour solidariser en rotation les rondelles de guidage 10 et 12 et le voile annulaire 24 avec un débattement angulaire relatif maximal prédéterminé, le voile annulaire 24 venant comprimer les ressorts 26 quand il se déplace en rotation dans un sens ou dans l'autre par rapport aux rondelles de guidage 10 et 12. Les échancrures 28, 30 constituent ici en des fenêtres. En variante les échancrures 28 consistent en des emboutis et les échancrures 30 en des fenêtres ouvertes vers l'extérieur.

A sa périphérie interne, le voile 24 est formé avec une denture 32 qui engrène avec un jeu circonférentiel prédéterminé avec une denture externe correspondante 34 de la périphérie externe du moyeu 14.

Le pré-amortisseur de torsion 22 comprend un élément cylindrique 36 formant une cage extérieure autour d'une denture périphérique 38 du moyeu 14, et des organes élastiquement déformables 40 à action circonférentielle, tels que des ressorts hélicoïdaux, qui ont une raideur inférieure à celle des ressorts 26 de l'amortisseur principal et qui sont disposés dans des logements formés en vis à vis pour partie dans l'élément cylindrique 36 et pour partie dans la denture 38 du moyeu 14. Les ressorts 40 du pré-amortisseur ont pour fonction de transmettre un couple de rotation entre l'élément cylindrique 36, qui est lui-même entraîné en rotation par le voile annulaire 24, et le moyeu 14 qui constitue l'élément de sortie de l'amortisseur de torsion. La denture périphérique 38 s'étend ici radialement au-dessus de la denture externe 34 en étant décalée axialement par rapport à cette denture 34.

Dans le cas d'un embrayage pour véhicule automobile, le pré-amortisseur 22 est destiné à absorber les vibrations au régime de ralenti du moteur à combustion interne équipant le véhicule, la raideur des ressorts 26 de l'amortisseur principal étant telle que, à ce régime, le voile annulaire 24 est solidaire en rotation des rondelles de guidage 10 et 12 et donc du disque de friction de l'embrayage.

Quand le régime de rotation du moteur augmente, les ressorts 40 du pré-amortisseur 22 sont comprimés, ce pré-amortisseur est en butée du fait que les dentures 32, 34 viennent en prise et se comporte comme un élément rigide car le voile 24 est alors lié en rotation au moyeu 14, et les vibrations et oscillations de couple sont absorbées par l'amortisseur principal 20 jusqu'à ce que, le régime de rotation et le couple transmis augmentant, les ressorts 26 soient comprimés au maximum et que l'amortisseur principal 20 se comporte comme un élément rigide. En variante la limation est réalisée par venue en prise de colonnettes avec des bords d'échancrures réalisées dans le voile 33 et traversées par les colonnettes reliant entre elles les rondelles de guidage de l'amortisseur principal comme visible dans le document FR-2728642 précité.

Des rondelles de frottement 42 et 44 respectivement sont associés à l'amortisseur principal 20 et au pré-amortisseur 22 et sont disposées entre la rondelle de guidage 12 et le voile annulaire 24 et entre cette rondelle de guidage et un épaulement de la surface périphérique externe du moyeu 14 respectivement, chaque rondelle de frottement étant associée à une rondelle élastique 46, 48 respectivement formant ressort, qui la pousse axialement en appui sur le voile annulaire 24 pour la rondelle de frottement 42 et sur la rondelle de guidage 12 pour la rondelle de frottement 44. La rondelle 42 est solidaire en rotation, par coopération de formes, avec la rondelle de guidage 12, tandis que la rondelle de frottement 44 est solidaire en rotation du moyeu 14. Ainsi, les vibrations transmises au pré-amortisseur 22 sont amorties par frottement de la rondelle 44 sur la rondelle de guidage 12 et, de même, les vibrations et oscillations de couple transmises à l'amortisseur principal 20 sont amorties par frottement de la rondelle 42 sur le voile annulaire 24.

Ici la rondelle de frottement est liée en rotation à la rondelle de guidage concernée 12 par des pions engagés dans des trous de cette rondelle comme visible à la figure 1.

Par ailleurs, dans cet exemple de réalisation, l'élément cylindrique 36 formant la cage extérieure du pré-amortisseur 22, qui est solidaire en rotation du voile annulaire 24, a une fonction de frottement sur la rondelle de guidage 10 et sur le moyeu 14, et une fonction de centrage de la rondelle de guidage 10 par rapport au moyeu 14. L'élément cylindrique 36 retient également vers l'extérieur les ressorts 40.

Selon l'invention, cet élément cylindrique 36 est formé d'une pièce métallique 50 dont la partie radialement la plus interne, servant au frottement ici sur la rondelle de guidage 10 et sur le moyeu 14 et au centrage de la rondelle de guidage 10, est recouverte sur ses deux faces d'une couche d'une matière 52 à faible coefficient de friction, possédant les caractéristiques mécaniques nécessaires. Cette matière 52 est typiquement une matière plastique, et de préférence une matière thermoplastique, qui est surmoulée sur cette partie radialement interne de la pièce métallique 50. Des trous 54 ici cylindriques sont formés dans cette pièce pour l'ancrage de la matière plastique surmoulée. Bien entendu les trous 54 peuvent avoir une forme oblongue.

La pièce métallique 50 est mise en forme par emboutissage et comporte, à son extrémité radialement la plus externe, des pattes 56 qui s'étendent en direction axiale et qui sont destinées à solidariser l'élément 36 en rotation avec le voile annulaire 24, ces pattes 56 radialement minces étant reçues dans des renfoncements 58 formés au fond des échancrures 30 du voile 24 dans lesquelles sont placés les ressorts 26 de l'amortisseur principal. Les pattes 56 permettent donc de diminuer la taille des renforcements 58 et ont en section une forme rectangulaire.

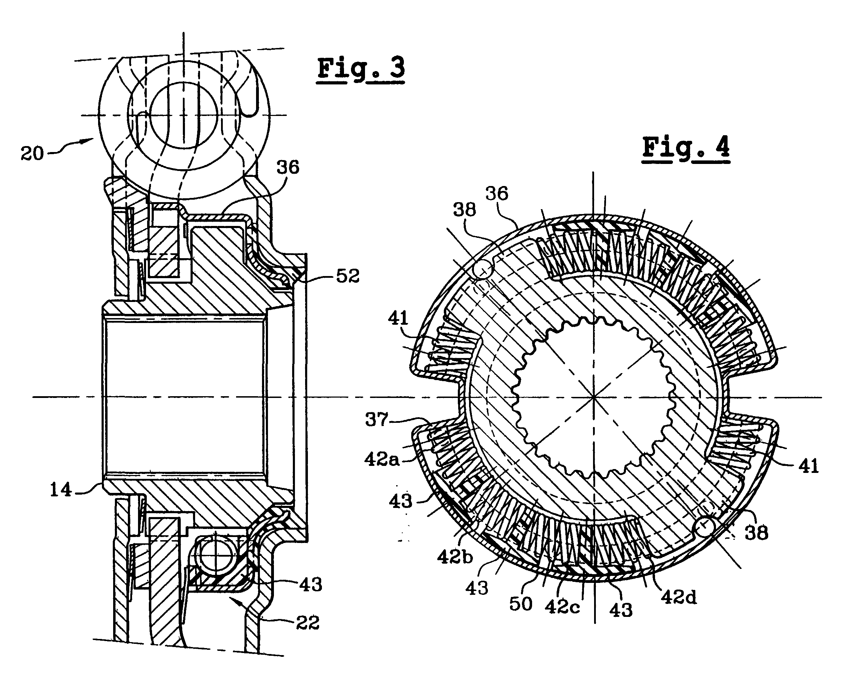

La partie cylindrique de la pièce métallique 50 de forme creuse est formée (figures 2 et 3) avec des cavités ou renfoncements 60 en saillie vers l'extérieur, qui forment des logements partiels des ressorts 40 du pré-amortisseur.

Dans le mode de réalisation de la figure 1, les ressorts 40 sont également logés pour partie dans des échancrures de la denture périphérique 38 précitée du moyeu 14 et ce en vis à vis des renforcements 60.

Dans le mode de réalisation de la figure 3, les ressorts 40 sont montés circonférentiellement entre des pièces intermédiaires 62 sensiblement en forme de secteur annulaire qui sont disposées entre la partie cylindrique de la pièce métallique 50 et la denture périphérique 38 du moyeu 14 et qui sont engagées fixement chacune entre deux dents consécutives 64 de cette denture. Ces pièces 62 présentent donc à leur périphérie interne une dent, ici de forme trapézoïdale, pour pénétrer de manière complémentaire dans une échancrure de la denture périphérique 38.

Les extrémités circonférentielles des pièces intermédiaires 62 sont en appui sur les extrémités des ressorts 40 par l'intermédiaire de coupelles 66 ayant une face externe en forme de dièdre dans laquelle s'emboîte une extrémité d'une pièce intermédiaire 62 et, du côté opposé, une queue cylindrique 68 engagée dans une extrémité d'un ressort 40. Les pièces 62 peuvent être métalliques ou en matière plastique. Les extrémités circonférentielles des pièces 62 ont une forme complémentaire, ici en forme de V, à celle de la partie basse des coupelles 66, avantageusement en matière plastique pour réduction des bruits.

Comme on le voit en figure 3, la pièce métallique 50 est formée avec quatre cavités 60 de logement partiel des ressorts 40, ces cavités 60 étant à 90 degrés les unes des autres et ayant des dimensions circonférentielles différentes, deux cavités 60 diamétralement opposées ayant une dimension circonférentielle sensiblement égale à celle d'un ressort 40 et de ses deux coupelles d'extrémité 66, les deux autres cavités 60 ayant une dimension circonférentielle supérieure de façon à ce que, lors du fonctionnement au régime de ralenti, deux ressorts 40 interviennent d'abord pour la transmission d'un couple de rotation entre le voile annulaire 24 et le moyeu 14, les deux autres ressorts intervenant ensuite lorsque le couple transmis augmente.

Comme on le voit bien en figure 1, la faible épaisseur de la pièce métallique 50 et des pattes axiales 56 de liaison avec le voile 24 permet de diminuer l'encombrement axial et radial du préamortisseur et de rapprocher de l'axe de rotation 18 les ressorts 26 de l'amortisseur principal.

De plus, cette pièce métallique 50 a une durée de vie et une fiabilité supérieures à celle d'un élément correspondant en matière plastique.

En variante la matière 52 ne recouvre que la face inférieure de l'élément 36. Cet élément 36 comporte, ainsi qu'il ressort à l'évidence de la description et des dessins, une partie cylindrique d'orientation axiale prolongée à l'une de ces extrémités axiale par une partie d'orientation transversale trouée et terminée par une extrémité interne arrondie.

Un arrondi raccorde la partie d'orientation transversale formant fond à la partie cylindrique. Les pattes 56 alternent circonférentiellement avec les cavités 60 saillantes radialement par rapport aux pattes 56 d'orientation axiale. Ces pattes 56 se raccordent par un pli à la partie cylindrique en s'étendant radialement au-dessus de celle-ci. Les cavités 60 prolongent radialement vers l'extérieur la partie cylindrique comme mieux visible à la figure 3.

La partie d'orientation axiale est limitée à son autre extrémité axiale par un rebord d'orientation transversale s'étendant radialement, sur une faible longueur, en direction opposée à la partie d'orientation transversale constituant le fond troué centralement de la pièce métallique 50 en contact par son bord d'orientation transversale avec le voile 24. Ce fond est admis, dans une forme de réalisation, à frotter directement sur la rondelle de guidage 10 lorsque la matière plastique ne recouvre que la partie inférieure de l'élément 36, plus précisément la partie inférieure du fond de la pièce métallique 50, pour contact avec le moyeu 14 et diminution des frottements.

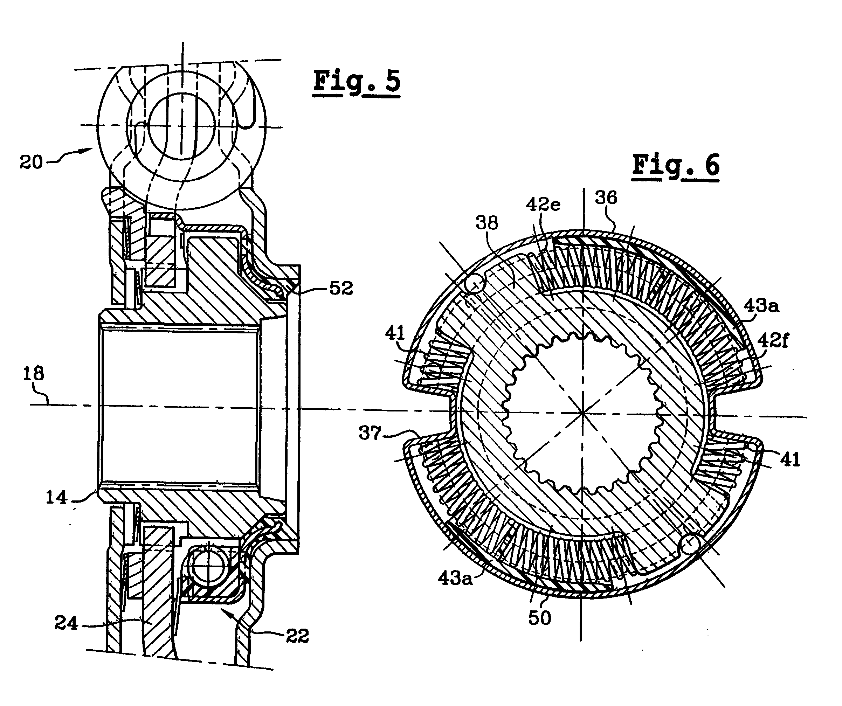

Bien entendu (figure 4 et 5) on peut tirer partie des cavités 60 pour déformer localement le rebord transversal 205 de la pièce 50 afin de créer au moins une butée 204 décalée axialement en direction opposée au voile 24.

La butée 204 est réalisée aisément par emboutissage local du rebord affectant la partie annulaire d'orientation axiale 136 de la pièce creuse métallique 50, la référence 139 désignant la partie d'orientation transversale précitée formant le fond de la pièce 50.

La butée 204 a ici une section en forme de U. Dans ce mode de réalisation une butée 204 est prévue par cavité 60. Chaque butée interrompt centralement le rebord 205 en contact de frottement avec le voile 24. On notera que la rondelle de guidage 10 présente, comme dans les figures précédentes, une douille 140 d'orientation axiale à sa périphérie interne pour contact avec la matière 52 formant palier. C'est pour cette raison que la partie 139 présente une forme arrondie à sa périphérie interne. La partie 139 est insérée fermement dans la matière 52, grâce aux trous 54.

Ici on profite des butées 204, délimitant des encoches, pour engager dans celles-ci des pattes 202 de forme rectangulaire appartenant à la périphérie externe d'une rondelle Belleville 200 en appui à sa périphérie interne sur une rondelle 201, dite rondelle tiroir, dotée à sa périphérie interne d'une denture interne 203 engrenant à jeu circonférentiel avec la denture externe 34 du moyeu 14 et ce avec un jeu circonférentiel inférieur à celui existant entre les dentures 32, 34 du voile 24 et du moyeu 14.

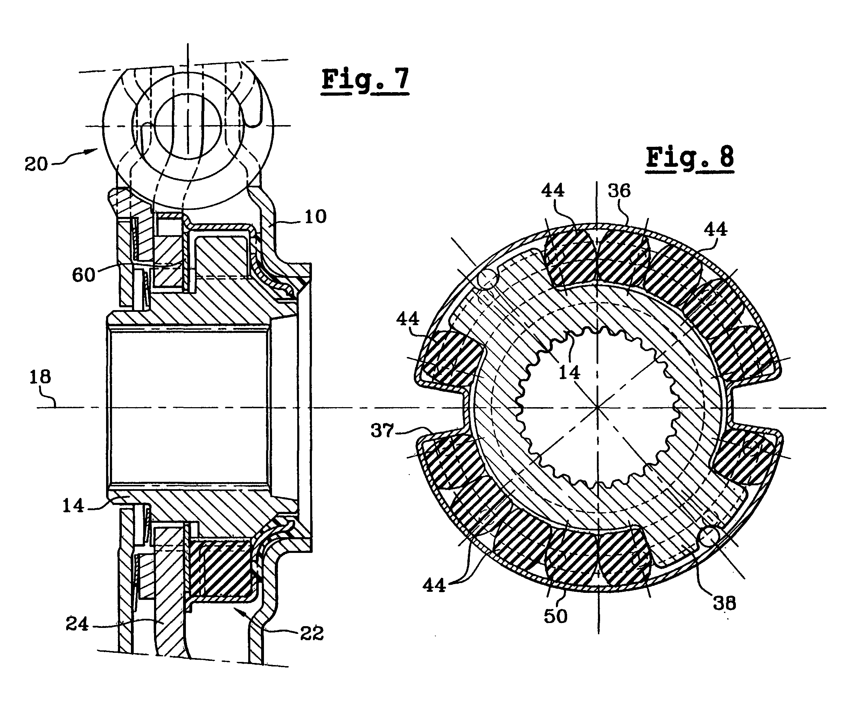

La rondelle tiroir 201 intervient ainsi avant que les dentures 32, 34 viennent en prise pour freiner la venue en prise des dentures et réduire ainsi les bruits. Cet effet de freinage est contrôlé par la rondelle Belleville 200 dont le tarage dépend des applications. Les rondelles 200, 201 sont logées en majeure partie dans la pièce métallique. Bien entendu (figure 6 et 7) une rondelle 300 peut être intercalée axialement entre les rondelles 46 et 42. Cette rondelle présente à sa périphérie externe au moins deux pattes 301 saillantes radialement vers l'extérieur, en direction opposée à l'axe 18, pour venir en prise avec les ressorts 26. Pour ce faire les pattes 301 présentent un retour en équerre 302 pénétrant chacun dans une fenêtre 30 pour venir en prise avec ici une extrémité circonférentielle d'un ressort 26.

Les ressorts 26 sont montés sans jeu dans les fenêtres 28. Ici deux ressorts 26 sont montés sans jeu dans les fenêtres 30 et deux autres avec jeu dans les fenêtres 30. Ces deux autres ressorts 26 interviennent donc de manière différée. Les pattes 301, en forme de drapeau, viennent en prise avec les ressorts 26, à action différée, diamétralement opposés, en sorte que la rondelle 300 fait sentir ses effets de manière différée après venue en prise des dentures 32-34. On obtient ainsi une bonne filtration des vibrations.

Dans les figures 6 et 7 aucune rondelle tiroir n'est prévue. Bien entendu on peut prévoir une telle rondelle tiroir comme dans les figures 4 et 5, ceci pour bien amortir les vibrations. En variante la rondelle tiroir peut être intercalée entre la rondelle 42 et le voile 24, toutes les combinaisons étant possibles.

Bien entendu la partie annulaire d'orientation axiale peut être purement de forme cylindrique comme visible en 236 dans les figures 7 et 8 et suivantes. Localement cette partie est emboutie radialement vers l'intérieur, c'est à dire vers l'axe 18, pour formation ici de deux pattes 237 creuses diamétralement opposées.

Ces pattes 237 servent d'appui à des ressorts 41, 42 de longueur circonférentielle différentes, appartenant au préamortisseur.

Le ressort 42 le plus long a une forme courbe et est par exemple précintré avant son montage au sein du préamortisseur 22.

La denture périphérique du moyeu comporte deux pattes diamétralement opposées 238 saillantes radialement vers l'extérieur. Les ressorts 41 et 42 prennent appui chacun à leurs extrémités circonférentielle respectivement sur une patte 237 et sur une patte 238.

Les ressorts 41, 42 interviennent de manière dissymétrique .

Selon le sens de rotation du moyeu 14 par rapport au voile 24 on obtient donc un débattement angulaire relatif différent entre les deux pièces 14, 24. Le débattement est ainsi plus grand lorsque le moteur thermique du véhicule entraîne les roues du véhicule - sens direct - que lorsque c'est l'inverse - sens rétro -.

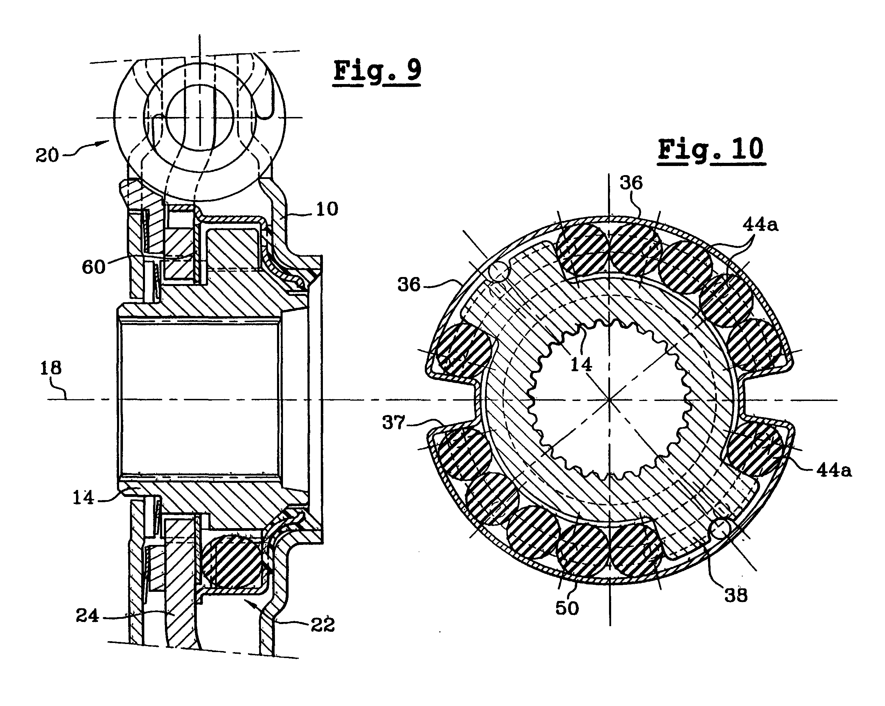

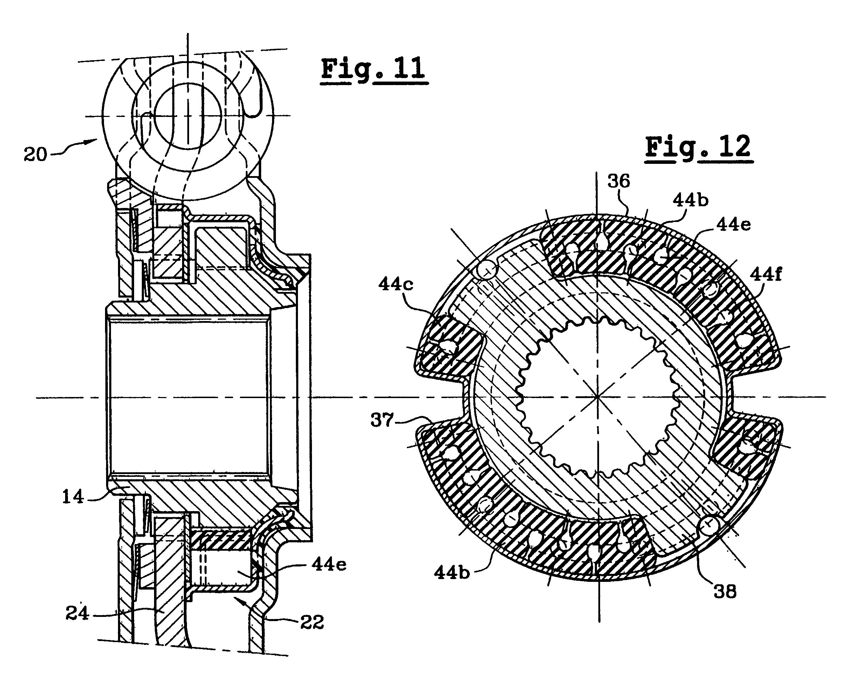

Le ressort 42 est dimensionné en conséquence. La pièce 50 a donc une forme de cuvette avec un fond troué portant la couche de matière 52. Bien entendu le ressort le plus long 42 peut être remplacé (figures 10 et 11) par plusieurs ressorts 42a, 42b,42c, 42d montés en série avec intercalation d'entretoises 43 en forme de T évitant ainsi la venue en prise des ressorts 42a, 42b .... avec la partie cylindrique 236 sous l'action de la force centrifuge. Cela réduit les phénomènes d'incrustation des ressorts dans la partie 236 et réduit donc les usures. La pièce métallique 50 n'a donc pas à être soumise à une opération supplémentaire de durcissage.

On notera que deux des entretoises 43 ont une forme symétrique, tandis que celle la plus proche de la patte 238, a une forme non symétrique, son aile dirigée vers la patte 238 étant plus longue.

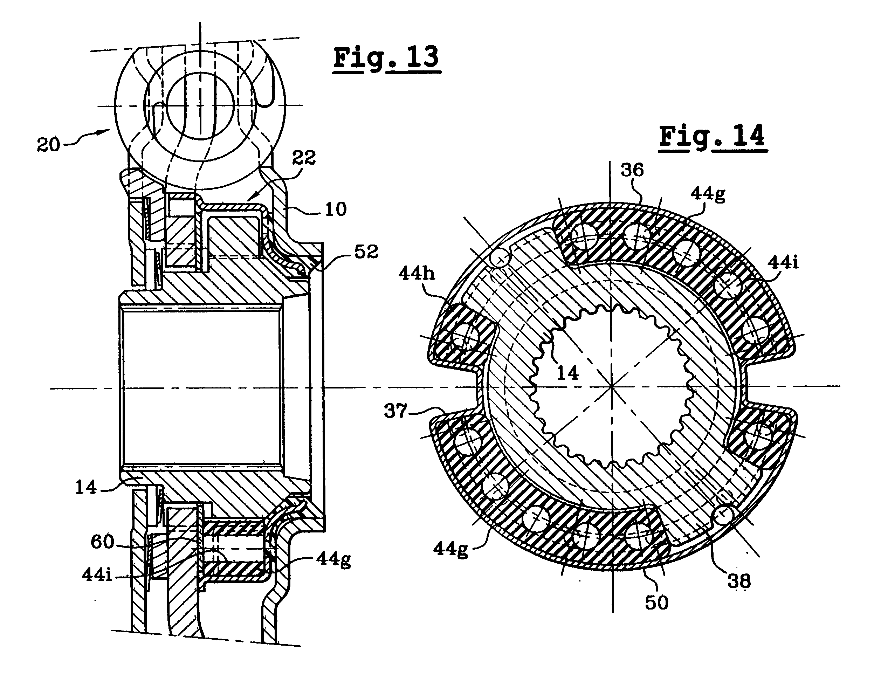

Bien entendu (figure 12 et 13) deux ressorts 42^{e}, 42f de plus grande longueur circonférentielle peuvent être prévus (figures 12 et 13). Une seule entretoise 43a est alors prévue. Cette entretoise globalement en forme de T présente des ailes courbes intercalées entre la périphérie interne de la partie 236 et la périphérie externe du ressort 42^{e}, 42f concerné pour éviter un contact métal sur métal entre les ressorts et la partie 236 et réduire les usures. Les entretoises 43, 43a sont par exemple matière plastique chargée par des fibres, par exemple de verre.

Les ressorts 41, 42 peuvent être remplacés par des plats en matière élastique 44 comme visible dans les figures 14 et 15. Cette disposition permet de supprimer les entretoises et conduit donc à une réduction du nombre de pièces. Comme matière élastique on choisit par exemple de l'élastomère ou du caoutchouc. La courbe caractéristique (force exercée en fonction de l'écrasement) n'est donc pas linéaire ce qui permet d'obtenir une courbe plus progressive et un meilleur amortissement. Certain des plats 44 - ceux reconstituant les ressorts 42, 42a, ..... - sont placés en série à l'intérieur de la pièce 50 globalement en forme de cuvette. Les plats 44 sont placés radialement sous les ressorts 26 de l'amortisseur principal 20 et axialement entre le voile 24 et la rondelle de guidage 10 de l'amortisseur principal 20. Les plats 44 montés en série ont, dans une forme de réalisation des duretés différentes afin d'avoir avantageusement un préamortisseur avec une courbe de progressivité croissante pour mieux fileter les vibrations.

Les ressorts 42, 42a ... des figures 10 à 13 peuvent également avoir des raideurs différentes pour obtenir également une courbe de progressivité croissante (charge exercée en fonction du débattement angulaire entre le moyeu 14 et la pièce métallique 50).

A la figure 15 les plats 44 sont globalement en forme tonneau pour obtenir une raideur linéaire, croissante et progressive en fonction du débattement angulaire relatif entre le voile 24 et le moyeu 14. En effet les zones de contact entre les plats augmentent progressivement. Un plus grand nombre de plats 44 est disposé dans le sens direct que dans le sens rétro décrits ci-dessus.

Ces plats 44 exercent une charge initiale faible pour maintenir et définir la position de repos initiale du moyeu 14. On obtient également un frottement radial croissant entre les plats 44 et la partie cylindrique 236.

Avec des plats 44 en forme de tonneau ce frottement est important. On peut diminuer ce frottement en donnant une forme de rouleau aux plats comme visible en 44a dans les figures 16 et 17.

Bien entendu la géométrie des plats 44, 44a peut être telle qu'ils prennent contact radial avec la périphérie interne de la partie 236 pendant le débattement angulaire relatif entre les pièces 24, 14. Un jeu radial peut donc exister initialement entre les plats 44, 44a et la partie 236.

Ces plats 44, 44a gonflent axialement également pendant le débattement angulaire relatif entre les pièces 14, 24. On profite de cela pour serrer de manière progressive la rondelle tiroir 201. Cela permet de supprimer la rondelle élastique 200 de la figure 4 ou des figures 10 et 12 tout en ayant en final un serrage important.

Pour ce faire avantageusement les plats 44 ont une forme de tonneau avec latéralement deux méplats pour augmentation des surfaces de contact avec la rondelle 201 et avec le fond de la pièce 50 en forme de cuvette comme mieux visible à la figure 14.

Avec des plats en forme de rouleau 44a les zones de contact sont initialement plus faibles avec la rondelle 201 et le fond de la pièce 50 comme visible à la figure 16.

Dans tous les cas on obtient un serrage initial moins important de la rondelle 201 qu'à la figure 4.

Bien entendu les plats, en variante, sont en forme de bulles pour diminuer initialement les zones de contact. Tout cela dépend des applications .

Toutes les combinaisons sont possibles. Ainsi l'unique plat intervenant dans le sens rétro peut avoir une forme différente de celle des autres plats. La forme, la géométrie et les dimensions des plats dépendent donc des applications pour obtenir notamment les contact désirés.

Les plats peuvent être réunis entre eux de façon à former un unique composant comme visible en 44b dans les figures 18 et 19.

Grâce à deux séries de fentes borgnes 44^{e}, 44f réparties de manière alternée et régulière circonférentiellement. Une première série de fente 446 débouche à la périphérie externe du plat 44b, en regard de la partie 236, tandis que l'autre série de fente 44f débouche à la périphérie interne du plat 44b en regard du moyeu. Les fentes 44^{e}, 44f sont globalement en forme de poire et donnent radialement et circonférentiellement de la souplesse au plat 44b plus long circonférentiellement que le plat 44c pourvu d'une unique fente du type de celle de la série de fente 44^{e}. En variante (figures 20, 21) le plat 44g est en forme de bande doté de trous cylindriques 44i. Le plat 44h intervenant dans le sens rétro présente également un trou cylindrique 44i.

Les plats 44g, 44h facilitent leur montage au sein du préamortisseur 22.

Les fentes 44^{e}, 44f, 44i permettent de donner au préamortisseur une raideur progressive et un couple de frottement croissant, comme dans les figures 14 à 17, avec une action sur la périphérie interne de la partie 236.

Lors du débattement angulaire entre les pièces 14, 24 la matière élastique remplit les fentes 44^{e}, 44f, 44i.

On appréciera que la pièce métallique 50 des figures 8 à 21 a une forme plus simple que la pièce 50 de la figure 2 et qu'elle est du type standard dans ces figures.

Plus précisément on peut monter dans celle-ci différents types d'organes élastiques par exemple les ressorts 41, 42 ou les plats 44, 44a ou les bandes 44b, 44g.

Bien entendu toutes les combinaisons sont possibles, le plat 44 actif dans le sens rétro peut être remplacé par un ressort 41 et vice versa.

Bien entendu on peut prévoir deux ressorts 41 ou deux plats 44, 44a, 44c, 44h dans le sens rétro, le nombre de plats et/ou de ressort dans le sens direct étant diminué.

Avec des plats ou des bandes en matière élastique, telle que de l'élastomère ou du caoutchouc on obtient en plus un frottement interne.

Bien entendu le nombre de pattes 237, 238 peut être supérieur à deux.

Dans les figures 15 et 17 on peut remplacer un plat par un plat rigide, par exemple en matière plastique, pour obtenir une courbe caractéristique différente. Les plats ou les bandes peuvent être chargées par de la matière.

En variante la rondelle 201 peut engrener sans jeu avec la denture externe 34 du moyeu. Cette rondelle dans les figures 8 à 21 permet d'éviter un contact direct des plats ou des bandes avec le voile.

La matière 52 peut revêtir le fond de la pièce 50, plus précisément la face de celle-ci tournée vers le voile 24 pour éviter un contact direct des plats ou des bandes avec la pièce 50.

## Revendications

1. Amortisseur de torsion pour embrayage, en particulier pour véhicule automobile, comprenant un élément d'entrée relié par un amortisseur principal (20) et un pré-amortisseur (22) à un élément de sortie (14), l'amortisseur principal comprenant deux rondelles de guidage (10, 12) solidaires de l'élément d'entrée, un voile annulaire (24) disposé entre les deux rondelles de guidage et engrenant avec jeu avec l'élément de sortie (14), et des premiers organes élastiquement déformables (26) à action circonférentielle logés dans des échancrures (28, 30) des rondelles de guidage et du voile, le pré-amortisseur (22) comprenant un élément cylindrique (36) solidaire en rotation du voile annulaire (24) et des seconds organes élastiquement déformables (40) à action circonférentielle montés dans des logements formés dans l'élément cylindrique (36) précité et dans l'élément de sortie (14), **caractérisé en ce que** l'élément cylindrique (36) précité comprend une pièce métallique (50) dont au moins une partie est recouverte d'une couche ou épaisseur d'une matière (52) à faible coefficient de frottement pour former une surface de guidage et/ou de frottement sur une autre pièce de l'amortisseur de torsion.

2. Amortisseur selon la revendication 1, **caractérisé en ce que** la matière précitée est une matière plastique, en particulier une matière thermoplastique.

3. Amortisseur selon la revendication 1 ou 2, **caractérisé en ce que** ladite matière (52) est surmoulée sur la partie précitée de la pièce métallique (50).

4. Amortisseur selon la revendication 3, **caractérisé en ce que** ladite partie de la pièce métallique (50) comporte des trous (54) d'ancrage de la matière (52) précitée.

5. Amortisseur selon l'une des revendications précédentes, **caractérisé en ce que** les deux faces de ladite partie de la pièce métallique (50) sont recouvertes d'une couche de la matière (52) précitée pour former des surfaces de frottement sur l'élément de sortie (14) et sur une rondelle de guidage (10), respectivement.

6. Amortisseur selon l'une des revendications précédentes, **caractérisé en ce que** la partie précitée de ladite pièce métallique recouverte de la matière (52) à faible coefficient de frottement forme un palier de centrage d'une rondelle de guidage (10) précitée.

7. Amortisseur selon l'une des revendications précédentes, **caractérisé en ce que** ladite pièce métallique (50) est formée par emboutissage.

8. Amortisseur selon l'une des revendications précédentes, **caractérisé en ce que** ladite pièce métallique (50) comporte des cavités ou renfoncements (60) en saillie radiale vers l'extérieur, formant des logements partiels des organes élastiquement déformables (40) du pré-amortisseur.

9. Amortisseur selon la revendication 8, **caractérisé en ce que** chaque organe élastiquement déformable (40) du pré-amortisseur est maintenu circonférentiellement entre deux pièces intermédiaires (62) sensiblement en forme de secteur annulaire, qui sont disposées entre ladite pièce métallique (50) et l'élément de sortie (14) et qui sont solidaires en rotation de l'élément de sortie (14) par engrènement avec des dents d'une denture périphérique (64) de l'élément de sortie (14).

10. Amortisseur selon l'une quelconque des revendications 1 à 7, **caractérisé en ce que** la pièce métallique 50 comporte une partie annulaire d'orientation axiale (236) en sorte qu'elle est globalement en forme de cuvette.

11. Amortisseur selon la revendication 10 **caractérisé en ce que** la partie annulaire (236) est interrompue par au moins deux pattes creuses (237) dirigées radialement vers l'intérieur.

12. Amortisseur selon la revendication 11, **caractérisé en ce que** les pattes (237) servent d'appui à des organes élastiques prenant également appui sur des pattes radiales solidaires du moyeu (14).

13. Amortisseur selon la revendication 11 **caractérisé en ce que** des organes élastiques (41, 42 - 44 ...) interviennent de manière non symétrique de part et d'autre d'une patte du moyeu (11).

14. Amortisseur selon la revendication 12, **caractérisé en ce que** des organes élastiques (42, 44...) interviennent en série entre une patte (238) du moyeu (14) et une patte (237) de la pièce métallique.

15. Amortisseur selon la revendication 13 **caractérisé en ce que** les organes élastiques consistent en des plats en matière plastique.

## Patentansprüche

1. Torsionsdämpfer für eine Kupplung, insbesondere für Kraftfahrzeuge, umfassend ein Eingangselement, das durch einen Hauptdämpfer (20) und einen Vordämpfer (22) mit einem Ausgangselement (14) verbunden ist, wobei der Hauptdämpfer zwei fest mit dem Eingangselement verbundene Führungsscheiben (10, 12), eine ringförmige Zwischenscheibe (24), die zwischen den beiden Führungsscheiben angeordnet ist und mit Umfangsspiel am Ausgangselement (14) eingreift, und erste umfangsmäßig wirksame elastisch verformbare Organe (26) umfasst, die in Aussparungen (28, 30) der Führungsscheiben und der Zwischenscheibe gelagert sind, wobei der Vordämpfer (22) ein zylindrisches Element (36), das drehfest mit der ringförmigen Zwischenscheibe (24) verbunden ist, und zweite umfangsmäßig wirksame elastisch verformbare Organe (40) umfasst, die in Aufnahmen eingesetzt sind, die im vorgenannten zylindrischen Element (36) und/oder und im Ausgangselement (14) gelagert sind,
**dadurch gekennzeichnet,**
**dass** das vorgenannte zylindrische Element (36) ein Metallstück (50) umfasst, von dem wenigstens ein Teil mit einer Schicht oder Auflage aus einem Werkstoff (52) mit niedrigem Reibungskoeffizienten überzogen ist, um eine Führungs- und/oder Reibfläche auf einem anderen Teil des Torsionsdämpfers zu bilden.

2. Torsionsdämpfer nach Anspruch 1, **dadurch gekennzeichnet, dass** der vorgenannte Werkstoff ein Kunststoff, insbesondere ein Thermoplast, ist.

3. Torsionsdämpfer nach Anspruch 1 oder 2, **dadurch gekennzeichnet, dass** der besagte Werkstoff (52) auf dem vorgenannten Teil des Metallstücks (50) aufgeformt ist.

4. Torsionsdämpfer nach Anspruch 3, **dadurch gekennzeichnet, dass** der besagte Teil des Metallstücks (50) Verankerungslöcher (54) für den vorgenannten Werkstoff enthält.

5. Torsionsdämpfer nach einem der vorangehenden Ansprüche, **dadurch gekennzeichnet, dass** die beiden Flächen des besagten Teils des Metallstücks (50) mit einer Schicht des vorgenannten Werkstoffs überzogen sind, um Reibflächen auf dem Ausgangselement (14) und auf einer Führungsscheibe (10) zu bilden.

6. Torsionsdämpfer nach einem der vorangehenden Ansprüche, **dadurch gekennzeichnet, dass** der vorgenannte Teil des besagten Metallstücks, der mit dem Werkstoff (52) mit niedrigem Reibungskoeffizienten überzogen ist, ein Zentrierlager für eine vorgenannte Führungsscheibe (10) bildet.

7. Torsionsdämpfer nach einem der vorangehenden Ansprüche, **dadurch gekennzeichnet, dass** das besagte Metallstück (50) ein Tiefziehteil ist.

8. Torsionsdämpfer nach einem der vorangehenden Ansprüche, **dadurch gekennzeichnet, dass** das besagte Metallstück (50) radial nach außen vorstehende Austiefungen oder Einsenkungen (60) umfasst, die partielle Aufnahmen für die elastisch verformbaren Organe (40) des Vordämpfers bilden.

9. Torsionsdämpfer nach Anspruch 8, **dadurch gekennzeichnet, dass** jedes elastisch verformbare Organ (40) des Vordämpfers in Umfangsrichtung zwischen zwei Zwischenstücken (62) in etwa in Form eines ringförmigen Segments gehalten wird, die zwischen dem besagten Metallstück (50) und dem Ausgangselement (14) angeordnet sind und die drehfest mit dem Ausgangselement (14) durch Eingreifen an Zähnen einer Umfangszahnung (64) des Ausgangselements (14) verbunden sind.

10. Torsionsdämpfer nach einem der Ansprüchen 1 bis 7, **dadurch gekennzeichnet, dass** das Metallstück (50) einen axial ausgerichteten ringförmigen Teil (236) umfasst, so dass es insgesamt in Form einer Schale ausgeführt ist.

11. Torsionsdämpfer nach Anspruch 10, **dadurch gekennzeichnet, dass** der besagte ringförmige Teil (236) durch wenigstens zwei radial nach innen gerichtete hohle Ansätze (237) unterbrochen ist.

12. Torsionsdämpfer nach Anspruch 11, **dadurch gekennzeichnet, dass** die Ansätze (237) als Auflage für elastische Organe dienen, die außerdem auf fest mit der Nabe (14) verbundenen radialen Ansätzen zur Auflage kommen.

13. Torsionsdämpfer nach Anspruch 11, **dadurch gekennzeichnet, dass** elastische Organe (41, 42 - 44 ...) asymmetrisch beiderseits eines Ansatzes der Nabe (11) zum Einsatz kommen.

14. Torsionsdämpfer nach Anspruch 12, **dadurch gekennzeichnet, dass** elastische Organe (42, 44 ...) in Reihe zwischen einem Ansatz (238) der Nabe (14) und einem Ansatz (237) des Metallstücks zum Einsatz kommen.

15. Torsionsdämpfer nach Anspruch 13, **dadurch gekennzeichnet, dass** die elastischen Organe aus Flachstücken aus Kunststoff bestehen.

## Claims

1. Torsion damper for a clutch, in particular for a motor vehicle, comprising an input element connected by a main damper (20) and a predamper (22) to an output element (14), the main damper comprising two guide washers (10, 12) fixed to the input element, an annular damper plate (24) disposed between the two guide washers and meshing with clearance with the output element (14), and first circumferentially acting elastically deformable members (26) housed in scallops (28, 30) in the guide washers and the damper plate, the predamper (22) comprising a cylindrical element (36) rotationally fixed to the annular damper plate (24) and second circumferentially acting elastically deformable members (40) mounted in housings formed in the aforementioned cylindrical element (36) and in the output element (14), **characterised in that** the aforementioned cylindrical element (36) comprises a metallic piece (50), at least part of which is covered by a layer or thickness of a material (52) with a low coefficient of friction in order to form a guidance and/or friction surface on another piece of the torsion damper.

2. Damper according to Claim 1, **characterised in that** the aforementioned material is a plastic material, in particular a thermoplastic material.

3. Damper according to Claim 1 or 2, **characterised in that** the said material (52) is moulded onto the aforementioned part of the metallic piece (50).

4. Damper according to Claim 3, **characterised in that** the said part of the metallic piece (50) comprises holes (54) for anchoring the aforementioned material (52).

5. Damper according to one of the preceding claims, **characterised in that** the two faces of the said part of the metallic piece (50) are covered with a layer of the aforementioned material (52) in order to form friction surfaces on the output element (14) and on the guide washer (10) respectively.

6. Damper according to one of the preceding claims, **characterised in that** the aforementioned part of the said metallic piece covered with the material (52) with a low coefficient of friction forms a centring bearing for an aforementioned guide washer (10).

7. Damper according to one of the preceding claims, **characterised in that** the said metallic piece (50) is formed by pressing.

8. Damper according to one of the preceding claims, **characterised in that** the said metallic piece (50) comprises cavities or indentations (60) projecting radially outwards, forming partial housings for the elastically deformable members (40) of the predamper.

9. Damper according to Claim 8, **characterised in that** each elastically deformable member (40) of the predamper is held circumferentially between two intermediate pieces (62) substantially in the form of an annular sector, which are disposed between the said metallic piece (50) and the output element (14) and which are rotationally fixed to the output element (14) by meshing with teeth on a peripheral set of teeth (64) on the output element (14).

10. Damper according to any one of Claims 1 to 7, **characterised in that** the metallic piece (50) comprises an axially oriented annular part (236) so that it is roughly in the form of a bowl.

11. Damper according to Claim 10, **characterised in that** the annular part (236) is interrupted by at least two hollow lugs (237) directed radially inwards.

12. Damper according to Claim 11, **characterised in that** the lugs (237) serve as a support for elastic members also bearing on radial lugs integral with the hub (14).

13. Damper according to Claim 11, **characterised in that** elastic members (41, 42 - 44 ...) act non-symmetrically on each side of a lug on the hub (11).

14. Damper according to Claim 12, **characterised in that** elastic members (42, 44 ...) act in series between a lug (238) on the hub (14) and a lug (237) on the metallic piece.

15. Damper according to Claim 13, **characterised in that** the elastic members consist of flats made from plastics material.
